# EUROPEAN PATENT APPLICATION

(11) **EP 1 598 013 A1**
(43) Date of publication of application: **23.11.2005**
(21) Application number: 04709366.1
(22) Date of filing: 09.02.2004
(51) Int. Cl.: A61B 8/00

(54) **METHOD FOR DECIDING OPENING OF ULTRASONOGRAPHIC DEVICE**

(30) Priority: 18.02.2003 JP 2003040174
(71) Applicant: MATSUSHITA ELECTRIC INDUSTRIAL CO., LTD., Kadoma-shi, Osaka 571-8501 (JP)
(72) Inventor: NISHIGAKI, Morio, . (JP)
(74) Representative: Schorr, Frank Jürgen
(86) International application number: PCT/JP2004/001343
(87) International publication number: WO 2004/073519

(57) **Abstract**

There is provided a method for determining an aperture of an ultrasonic diagnostic apparatus that prevents a beam pattern from being deteriorated and allows an image with excellent quality to be obtained. The method includes: a beam formation simulation step (S102) of performing a simulation of an ultrasonic beam pattern to be formed, based on a parameter concerning a signal processing condition of a probe including a manner of adding and thinning received signals from transducers; and an addition and thinning pattern determination step (S103) of determining whether or not the beam pattern obtained in the beam formation simulation step satisfies a predetermined criterion including a maximum value of a sidelobe level, an allowable amount of reduction in sensitivity in the case where no addition and thinning is performed, and the like.

## Description

### Technical Field

The present invention relates to an ultrasonic diagnostic apparatus for observing and diagnosing a condition of a living body or the like by transmitting and receiving ultrasonic waves using a transducer array, and particularly to a method for determining optimally an aperture of an ultrasonic diagnostic apparatus.

### Background Art

At present, it is a well-known focusing technique to converge ultrasonic beams by using a plurality of transducers constituting a transducer array simultaneously.

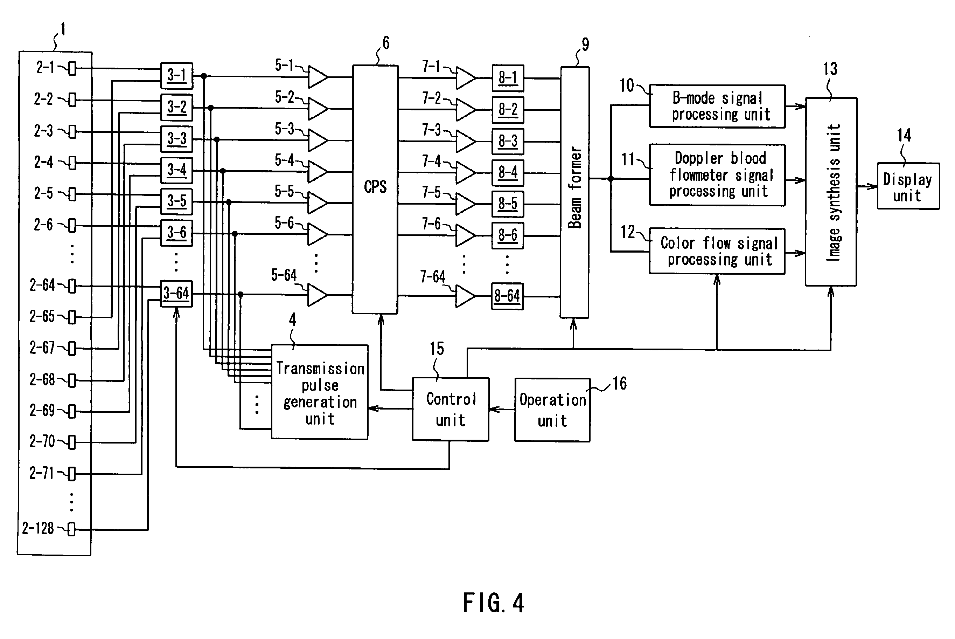

Figure 4 is a block diagram showing an exemplary configuration of a linear-scanning-type ultrasonic diagnostic apparatus according to a first conventional example. In Figure 4, a probe 1 includes arranged elements 2-1 to 2-128. Among the elements 2-1 to 2-128, elements (also referred to as aperture parts) to be used are selected by high-voltage switches 3-1 to 3-64. The elements selected by the high-voltage switches 3-1 to 3-64 are driven with transmission pulses generated by a transmission pulse generation unit 4. Ultrasonic beams transmitted from the selected elements and reflected in a body not shown are received by elements selected from the elements 2-1 to 2-128 by the high-voltage switches 3-1 to 3-64. The selected received signals are transmitted through voltage/current conversion amplifiers 5-1 to 5-64 to a cross point switch (CPS) 6, where they are sorted. The sorted signals are transmitted through current/voltage conversion amplifiers 7-1 to 7-64 to analog/digital (A/D) converters 8-1 to 8-64 so as to be converted into digital signals, and the obtained digital signals are subjected to a delay and sum operation by a beam former 9. An output signal from the beam former 9 is subjected to desired signal processing by any of a B-mode signal processing unit 10 for performing signal processing for B-mode display, a Doppler signal processing unit 11 for performing signal processing for a Doppler blood flowmeter, and a color flow signal processing unit 12 for performing signal processing for color flow. An image synthesis unit 13 synthesizes signals from the B-mode signal processing unit 10, the Doppler signal processing unit 11, and the color flow signal processing unit 12 to constitute a display image, which is then displayed on a display unit 14. Overall control is performed by a control unit 15, and an operation by an operator is performed through an operation unit 16.

An operation of the ultrasonic diagnostic apparatus thus configured has already been well known, and thus a description thereof will be omitted.

Such an ultrasonic diagnostic apparatus using a transducer array has to process signals from a plurality of transducers at the same time. Accordingly, it is necessary to provide as many A/D converters as transducers to be used at the same time and a beam former for receiving outputs from the A/D converters to subject the same to delay and sum operation processing, which results in a large physical quantity. A solution to this problem is proposed as described in JP 2000-157539 A as a second conventional example.

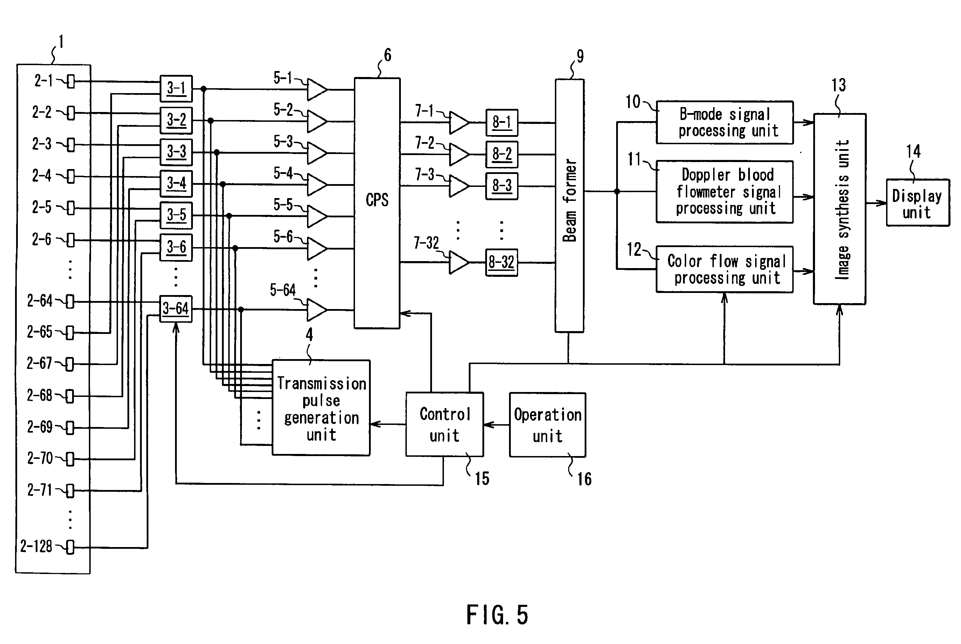

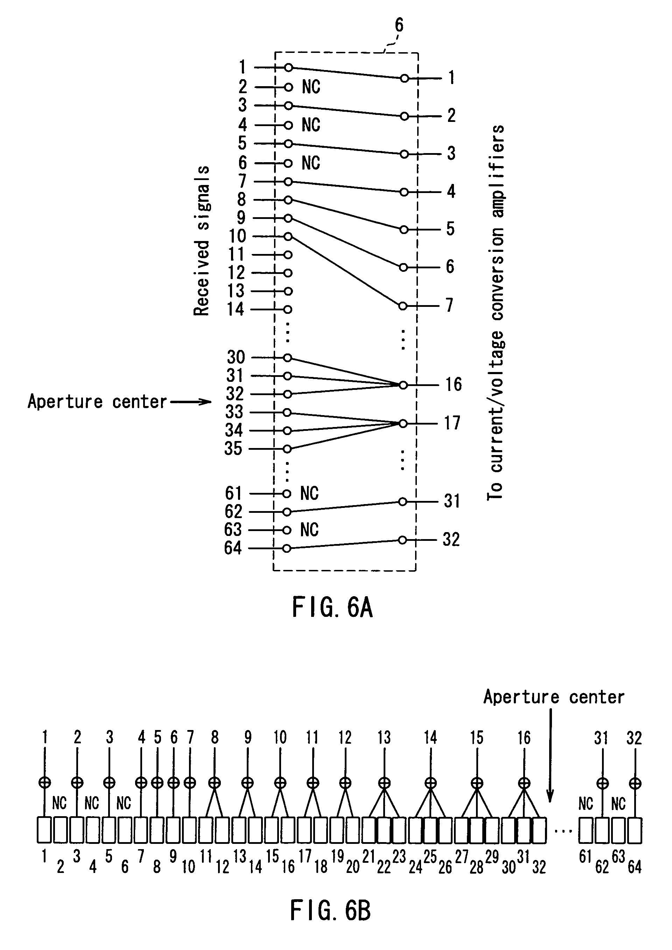

The second conventional example is described with reference to Figures 5 and 6.

Figure 5 is a block diagram showing an exemplary configuration of an ultrasonic diagnostic apparatus according to the second conventional example. In the first conventional example, the cross point switch 6 outputs sixty-four signals, and thus the sixty-four current/voltage conversion amplifiers 7-1 to 7-64 and the sixty-four A/D converters 8-1 to 8-64 are provided accordingly. On the other hand, in the second conventional example, a cross point switch 6 outputs thirty-two signals, and thus thirty-two current/voltage conversion amplifiers 7-1 to 7-32 and thirty-two A/D converters 8-1 to 8-32 are provided accordingly.

Figures 6A and 6B are diagrams showing a connection in the cross point switch 6 shown in Figure 5. In Figures 6A and 6B, signals are numbered 1, 2, ··· from an end of a reception aperture. In the cross point switch 6, a plurality of signals are connected to one output terminal (addition or combination). There are also signals that are connected to no output terminal (thinning). Since received signals are converted into currents in a preliminary stage toward the cross point switch 6, when two signals are connected to one output terminal, it is possible to take out from the output terminal an output signal in which currents of the two signals are added.

The connection in the cross point switch 6 also can be represented as shown in Figure 6B. In Figure 6B, input signals 1, 3, 5, 7, 8, 9, 10, 31, and 32 of the cross point switch 6 are connected to output terminals 1, 2, 3, 4, 5, 6, and 7, respectively. Input signals 2, 4, 6, 61, and 63 are connected to no output terminal. Two input signals 11 and 12, 13 and 14, 15 and 16, 17 and 18, and 19 and 20 are each connected to one output terminal 8, 9, 10, 11, or 12, respectively. Three input signals 21, 22, and 23, 24, 25, and 26, 27, 28, and 29, and 30, 31, and 32 are each connected to one output terminal 13, 14, 15, or 16, respectively.

As described above, by combining received signals from a plurality of transducers into one and providing channels not to be used, i.e., adding and thinning received signals from transducers, the number of input signals to the A/D converters and a beam former can be reduced, resulting in a decrease in physical quantity and minimization of the deterioration of a beam pattern.

However, also in the second conventional example, the influence exerted on the quality of an image for use in a diagnosis varies depending upon the manner of selecting received signals from transducers to be added or selecting received signals from transducers to be thinned. Thus, it is important for image quality to be obtained to determine optimally a manner of adding or thinning received signals from transducers.

### Disclosure of Invention

The present invention has been achieved in view of the above, and its object is to provide a method for determining an aperture of an ultrasonic diagnostic apparatus that prevents a beam pattern from being deteriorated and allows an image with excellent quality to be obtained by determining optimally a manner of adding or thinning received signals from transducers.

In order to achieve the above-mentioned object, in a method for determining an aperture of an ultrasonic diagnostic apparatus according to the present invention, the ultrasonic diagnostic apparatus includes: a probe including a plurality of transducer arrays for transmitting and receiving an ultrasonic beam to/from a subject; a transmission pulse generation unit for generating a plurality of transmission pulses for driving the transducer arrays; a beam former for subjecting signals received by the transducer arrays to a delay and sum operation; and a cross point switch for allocating the signals received by the transducer arrays to any of a plurality of input terminals of the beam former, wherein a manner of adding and thinning the received signals in the cross point switch is set so that more received signals from the transducers are input to one input terminal of the beam former on a center side rather than an end side of an aperture. The method includes: a beam formation simulation step of performing a simulation of an ultrasonic beam pattern to be formed, based on a parameter concerning a signal processing condition of the probe including the manner of addition and thinning; and an addition and thinning pattern determination step of determining whether or not the beam pattern obtained in the beam formation simulation step satisfies a predetermined criterion.

The method for determining an aperture of an ultrasonic diagnostic apparatus according to the present invention further includes a beam pattern formation step of modifying a pattern of addition and thinning when it is determined that the predetermined criterion is not satisfied in the addition and thinning pattern determination step.

According to the above configuration, since the beam formation simulation step and the addition and thinning pattern determination step based on the criterion of a beam pattern are provided, it is possible to calculate an optimum manner of adding and thinning the received signals from the transducers so as to obtain a favorable beam pattern while minimizing a reduction in sensitivity.

In the method for determining an aperture of an ultrasonic diagnostic apparatus according to the present invention, the parameter concerning a signal processing condition of the probe includes an interval between the transducers, a center frequency obtained from the transducers and a waveform of the transmission pulses, and a degree of opening of the aperture in accordance with a reflection depth of the received signals.

In the method for determining an aperture of an ultrasonic diagnostic apparatus according to the present invention, the predetermined criterion includes a maximum value of a sidelobe level and an allowable amount of reduction in sensitivity in the case where no addition and thinning is performed.

### Brief Description of Drawings

Figure 1 is a flow chart showing a procedure for determining a manner of adding and thinning received signals from a plurality of transducers in a method for determining an aperture of an ultrasonic diagnostic apparatus according to Embodiment 1 of the present invention.
Figure 2 is a flow chart showing a procedure for determining a manner of adding and thinning received signals from a plurality of transducers in a method for determining an aperture of an ultrasonic diagnostic apparatus according to Embodiment 2 of the present invention.
Figure 3 is a flow chart showing a procedure for determining a manner of adding and thinning received signals from a plurality of transducers in a method for determining an aperture of an ultrasonic diagnostic apparatus according to Embodiment 3 of the present invention.
Figure 4 is a block diagram showing an exemplary configuration of an ultrasonic diagnostic apparatus according to a first conventional example.
Figure 5 is a block diagram showing an exemplary configuration of an ultrasonic diagnostic apparatus according to a second conventional example.
Figure 6A is a diagram showing an example of a connection in a cross point switch 6 shown in Figure 5.
Figure 6B is a schematic diagram showing a manner of combining (adding) and thinning received signals from transducers in the case where the cross point switch 6 has the connection shown in Figure 6A.

### Best Mode for Carrying Out the Invention

Hereinafter, preferred embodiments of the present invention will be described with reference to the drawings.

### (Embodiment 1)

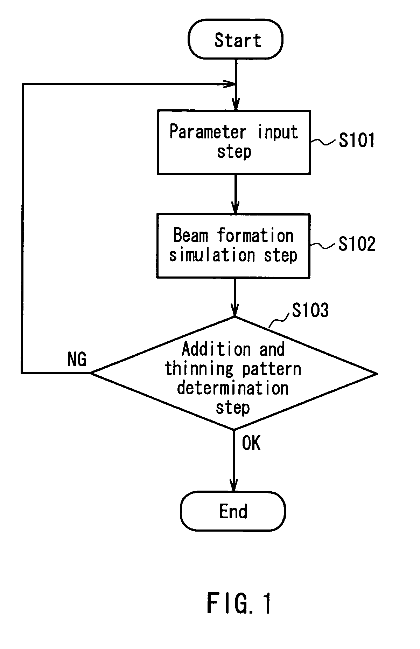

Figure 1 is a flow chart showing a procedure for determining a manner of adding and thinning received signals from a plurality of transducers in a method for determining an aperture of an ultrasonic diagnostic apparatus according to Embodiment 1 of the present invention.

In Figure 1, in a parameter input step (S101), data on a manner of adding and thinning received signals from transducers, a shape of a probe including data on a size of an interval between transducers, and the like are input as parameters. Then, in a beam pattern simulation step (S102), a simulation of beam formation is performed based on the parameters input in the parameter input step (S101). The beam pattern simulation step (S102) is performed in the following manner, for example. A distance from each transducer to a point of measurement in a medium to be subjected to ultrasonic irradiation is calculated, the distance is converted into time, and a difference between the converted time and a delay time essentially provided to the transducer is taken. Signals from the transducers are added with signals that have reached from other probes in the same manner, while the time lag is adjusted, whereby a synthesized waveform is obtained. The point of measurement in the medium is shifted sequentially in a horizontal direction at the same depth, thereby making a graph of sound pressure distribution. By taking attenuation in the medium into consideration, a more precise sound pressure distribution can be calculated.

Next, in an addition and thinning pattern determination step (5103), a pattern of addition and thinning is evaluated based on a criterion including the maximum value of a sidelobe level, an allowable amount of reduction in sensitivity in the case where no addition and thinning is performed, and the like.

In the addition and thinning pattern determination step (S103), when the criterion is satisfied (OK), the flow ends. However, when the criterion is not satisfied (NG), the process returns to the parameter input step (S101), so that the parameter concerning the manner of adding and thinning received signals from transducers is modified and input.

As described above, according to the present embodiment, there are provided the beam formation simulation step and the addition and thinning pattern determination step based on the criterion of a beam pattern. Therefore, it is possible to calculate an optimum manner of adding and thinning received signals from transducers so as to obtain a favorable beam pattern while minimizing a reduction in sensitivity.

### (Embodiment 2)

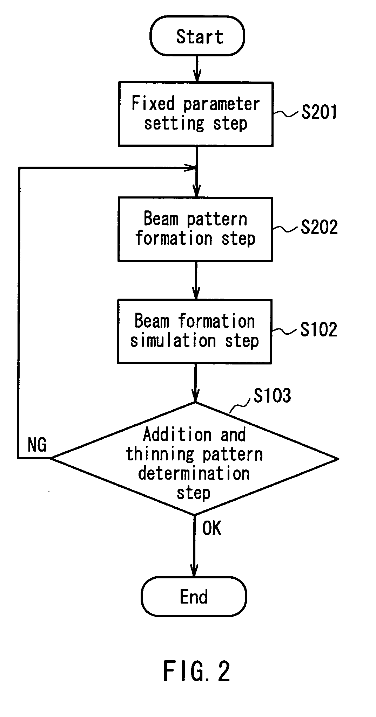

Figure 2 is a flow chart showing a procedure for determining a manner of adding and thinning received signals from a plurality of transducers in a method for determining an aperture of an ultrasonic diagnostic apparatus according to Embodiment 2 of the present invention.

In Figure 2, in a fixed parameter setting step (S201), fixed parameters such as an arrangement pattern of the transducers, a value of a transmission frequency corresponding to a center frequency of the transducers and a transmission pulse waveform, a diameter of an aperture, and the number of inputs to a beam former are set. Then, in a beam pattern formation step (S202), a provisional pattern of addition and thinning is formed and output in a first pass, and a beam pattern is obtained in a beam formation simulation step (S102). The obtained beam pattern is checked against a criterion, and the result of evaluation is output in an addition and thinning pattern determination step (S103). The criterion is the same as that in Embodiment 1.

In the addition and thinning pattern determination step (S103), when the criterion is not satisfied (NG), the process returns to the beam pattern formation step (S202), so that the pattern of addition and thinning is modified in a second and subsequent passes. For example, when a sidelobe is high, a pattern is formed such that addition is decreased and thinning is increased. The pattern is subjected to the beam formation simulation step (S102) again, and the process is repeated until the criterion in the addition and thinning pattern determination step (S103) is satisfied.

As described above, according to the present embodiment, a provisional pattern of addition and thinning is formed initially based on the fixed parameters such as an arrangement pattern of the transducers, a value of a transmission frequency, a diameter of an aperture, and the number of inputs to a beam former in the beam pattern formation step, and the beam pattern is modified until the criterion is satisfied. Therefore, as compared with Embodiment 1, there is an advantage that it is possible to save an operator from having to modify the parameter concerning the pattern of addition and thinning himself/her self.

### (Embodiment 3)

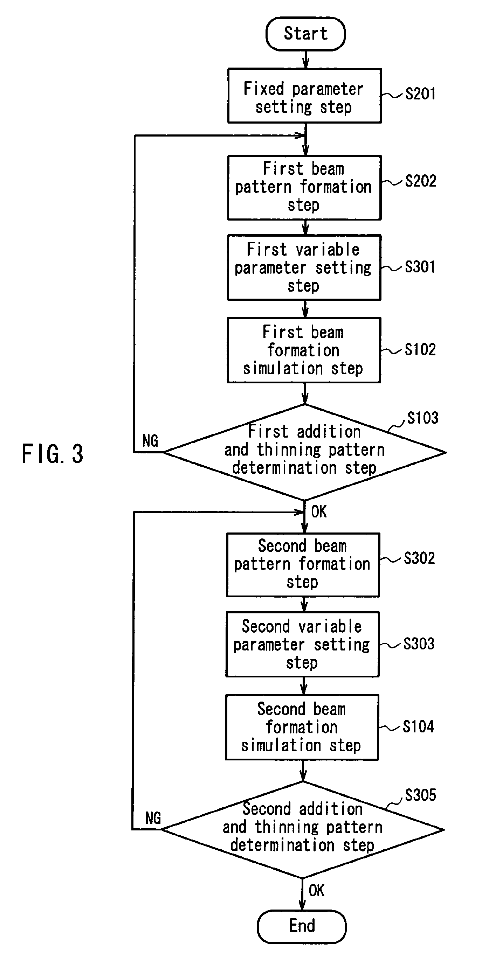

Figure 3 is a flow chart showing a procedure for determining a manner of adding and thinning received signals from a plurality of transducers in a method for determining an aperture of an ultrasonic diagnostic apparatus according to Embodiment 3 of the present invention.

In Figure 3, in a fixed parameter setting step (S201), fixed parameters such as an arrangement pattern of the transducers, a value of a transmission frequency corresponding to a center frequency of the transducers and a transmission pulse waveform, a diameter of an aperture, and the number of inputs to a beam former are set. Then, a provisional pattern of addition and thinning is formed and output in a first pass in a first beam pattern formation step (S202), a first variable parameter is set and output in a first variable parameter setting step (S301), and a beam pattern is obtained based on the provisional pattern of addition and thinning and the first variable parameter in a first beam formation simulation step (S102).

Herein, an example of the first variable parameter set and output in the first variable parameter setting step (S301) includes data on a depth at which the aperture becomes maximum, which can be obtained from a degree of opening of the aperture in accordance with a reflection depth of the received signals.

The beam pattern obtained in the first beam formation simulation step (S102) is checked against a first criterion, and the result of evaluation is output in a first addition and thinning pattern determination step (S103). The first criterion is the same as that in Embodiment 1.

In the first addition and thinning pattern determination step (S103), when the first criterion is not satisfied (NG), the process returns to the first beam pattern formation step (S202), so that the pattern of addition and thinning is modified in a second and subsequent passes. For example, when a sidelobe is high, a pattern is formed such that addition is decreased and thinning is increased. The pattern is subjected to the first beam formation simulation step (S102) again, and the process is repeated until the first criterion in the first addition and thinning pattern determination step (S103) is satisfied.

When the first criterion is satisfied (OK) in the first addition and thinning pattern determination step (S103), the pattern of addition and thinning that has satisfied the first criterion in the first addition and thinning pattern determination step (S103) is output in a first pass in a second beam pattern formation step (S302), a second variable parameter is set and output in a second variable parameter setting step (S303), and a beam pattern is obtained based on the pattern of addition and thinning that has satisfied the first criterion in the first addition and thinning pattern determination step (S103) and the second variable parameter in a second beam formation simulation step (S304).

Herein, an example of the second variable parameter set and output in the second variable parameter setting step (S303) includes data on a diameter of the aperture in a relatively shallow region and a depth for that data, which can be obtained from a degree of opening of the aperture in accordance with a reflection depth of the received signals.

In a second addition and thinning pattern determination step (S305), when the second criterion is not satisfied (NG), the process returns to the second beam pattern formation step (S302), so that the pattern of addition and thinning is modified in a second and subsequent passes, and the setting of the second variable parameter is modified in the second variable parameter setting step (S303). The pattern is subjected to the second beam formation simulation step (S304) again, and the process is repeated until the second criterion in the second addition and thinning pattern determination step (S305) is satisfied.

As described above, according to the present embodiment, there is an advantage that determination of the beam patterns at two depths can be performed and uniformity of an image in a depth direction can be maintained.

As described above, according to the present invention, in a delay and sum operation method in which signals from a plurality of transducers are added and thinned when being received, it is possible to calculate a pattern of addition and thinning such that a beam pattern is optimized, whereby an image with favorable quality in an ultrasonic diagnosis can be obtained.

## Claims

1. A method for determining an aperture of an ultrasonic diagnostic apparatus that includes: a probe including a plurality of transducer arrays for transmitting and receiving an ultrasonic beam to/from a subject; a transmission pulse generation unit for generating a plurality of transmission pulses for driving the transducer arrays; a beam former for subjecting signals received by the transducer arrays to a delay and sum operation; and a cross point switch for allocating the signals received by the transducer arrays to any of a plurality of input terminals of the beam former, wherein a manner of adding and thinning the received signals in the cross point switch is set so that more received signals from the transducers are input to one input terminal of the beam former on a center side rather than an end side of an aperture, the method comprising:
a beam formation simulation step of performing a simulation of an ultrasonic beam pattern to be formed, based on a parameter concerning a signal processing condition of the probe including the manner of addition and thinning; and
an addition and thinning pattern determination step of determining whether or not the beam pattern obtained in the beam formation simulation step satisfies a predetermined criterion.

2. The method for determining an aperture of an ultrasonic diagnostic apparatus according to claim 1, further comprising a beam pattern formation step of modifying a pattern of addition and thinning when it is determined that the predetermined criterion is not satisfied in the addition and thinning pattern determination step.

3. The method for determining an aperture of an ultrasonic diagnostic apparatus according to claim 1, wherein the parameter concerning a signal processing condition of the probe includes an interval between the transducers.

4. The method for determining an aperture of an ultrasonic diagnostic apparatus according to claim 1, wherein the parameter concerning a signal processing condition of the probe includes a center frequency obtained from the transducers and a waveform of the transmission pulses.

5. The method for determining an aperture of an ultrasonic diagnostic apparatus according to claim 1, wherein the parameter concerning a signal processing condition of the probe includes a degree of opening of the aperture in accordance with a reflection depth of the received signals.

6. The method for determining an aperture of an ultrasonic diagnostic apparatus according to claim 1, wherein the predetermined criterion includes a maximum value of a sidelobe level and an allowable amount of reduction in sensitivity in the case where no addition and thinning is performed.
